# EUROPEAN PATENT APPLICATION

(11) **EP 2 623 180 A1**
(43) Date of publication of application: **07.08.2013**
(21) Application number: 13153854.8
(22) Date of filing: 04.02.2013
(51) Int. Cl.: B01D 53/14

(54) **Systems and methods for capturing carbon dioxide**

(30) Priority: 06.02.2012 US 201213366569
(71) Applicant: General Electric Company, Schenectady, New York 12345 (US)
(72) Inventor: Ayala, Raul Eduardo, Houston, TX 77027 (US); Perry, Robert James, Niskayuna, NY 12309 (US)
(74) Representative: Picker, Madeline Margaret

(57) **Abstract**

A method for forming carbon dioxide from a gas stream, comprising chemically reacting carbon dioxide in a gas stream with a liquid phase-changing sorbent to form a solid reaction product, wherein the solid reaction product is in the form of a dry solid, a wet solid, a slurry or a fine suspension, storing the solid reaction product and heating the solid reaction product to form carbon dioxide gas and the liquid phase-changing sorbent.

## Description

### BACKGROUND OF THE INVENTION

This disclosure generally relates to methods and systems for capturing carbon dioxide (CO₂) from gaseous streams, and more particularly to methods and systems for handling and storing the captured CO₂.

The emission of carbon dioxide gas into the atmosphere from industrial sources such as power plants is now considered to be a principal cause of the "greenhouse effect", which contributes to global warming. In response, efforts are underway to reduce CO₂ emissions. Many different processes have been developed to accomplish this task. Examples include polymer and inorganic membrane permeation; removal of CO₂ by adsorbents such as molecular sieves; cryogenic separation; and scrubbing with a solvent that is chemically reactive with CO₂, or which has a physical affinity for the gas.

Most carbon capture techniques, such as those used in an acid gas removal system or a low-pressure CO₂ absorber in a gasification unit, use dilute aqueous solutions operated at low temperatures, of about 40°F or below, to remove CO₂ from flue gas streams, e.g., exhaust gas produced at power plants, to produce a stream of high purity CO₂. The high purity CO₂ product is then used in enhanced oil recovery (EOR) gasification applications or sequestered in saline aquifers.

During transient periods in a gasification plant, such as when one of the gasifiers or a high-pressure CO₂ stream compressor going to the EOR system trips and becomes unavailable, the CO₂ stream is sent to a low-pressure (LP) CO₂ absorber for temporary capture and avoidance of CO₂ emissions from the plant. Conventional methods for temporary CO₂ capture have a number of drawbacks associated with them. Conventional methods utilize liquid solvents for which operation at low pressure is only practical for short periods of time, e.g., about one hour. The volume of solvent used is limited in practice based on a limited volume capacity in the LP CO₂ absorber. The solvent reaches saturation after only a short period of time. As a result, large quantities of solvent are required to operate for extended periods of time, making extended or continuous use of a LP CO₂ absorber economically impractical. Similar drawbacks are associated with conventional acid gas removal (AGR) systems, which also rely on large volumes of dilute liquid solvents to capture CO₂.

In addition, storage, e.g., for transport, of captured carbon dioxide gas in compressed gas form or absorbed by a liquid solvent as described above also requires large volume capacity and presents further drawbacks such as the possibility of liquid entrainment, leaks or spills.

Therefore, a need exists for methods and systems that efficiently and effectively remove and store carbon dioxide from a gaseous stream.

### BRIEF DESCRIPTION OF THE INVENTION

According to one aspect of the invention, a method for forming carbon dioxide from a gas stream comprises chemically reacting carbon dioxide in a gas stream with a liquid phase-changing sorbent to form a solid reaction product, wherein the solid reaction product is in the form of a dry solid, a wet solid, a slurry, or a fine suspension, storing the solid reaction product and heating the solid reaction product to form carbon dioxide gas and the liquid phase-changing sorbent.

According to another aspect of the invention, a system for forming carbon dioxide from a gas stream, comprises a gas-liquid contactor comprising a gas stream inlet, the gas stream comprising carbon dioxide gas, a liquid phase-changing sorbent, wherein the liquid phase-changing sorbent is chemically reactive with carbon dioxide to form a solid reaction product, wherein the solid reaction product is in the form of a dry solid, a wet solid, slurry or a fine suspension, a storage chamber, wherein the solid reaction product is stored and a generation chamber, wherein the solid reaction product is heated to form carbon dioxide gas and the liquid sorbent.

The foregoing and other features of the present system and method will be further understood with reference to the drawings and detailed description.

### BRIEF DESCRIPTION OF THE DRAWINGS

The subject matter, which is regarded as the invention, is particularly pointed out and distinctly claimed in the claims at the conclusion of the specification. The foregoing and other features and advantages of the invention are apparent from the following detailed description taken in conjunction with the accompanying drawings in which:
FIG. 1 is a schematic of a system for recovering CO₂ from a gas stream; and
FIG. 2 is a schematic of a system for recovering CO₂ from a gas stream.

The detailed description explains embodiments of the invention, together with advantages and features, by way of example with reference to the drawings.

### DETAILED DESCRIPTION OF EMBODIMENTS OF THE INVENTION

Disclosed herein are methods and systems generally related to capturing carbon dioxide (CO₂) from gas streams, and more particularly to a solids delivery method and system to handle and store solid material containing the captured CO₂. In capturing the CO₂ gas from the gas stream, the method advantageously utilizes a liquid phase-changing sorbent that forms a solid in the presence of CO₂ and a delivery scheme that facilitates the storage and generation of a purified CO₂ gas and liquid phase-changing sorbent.

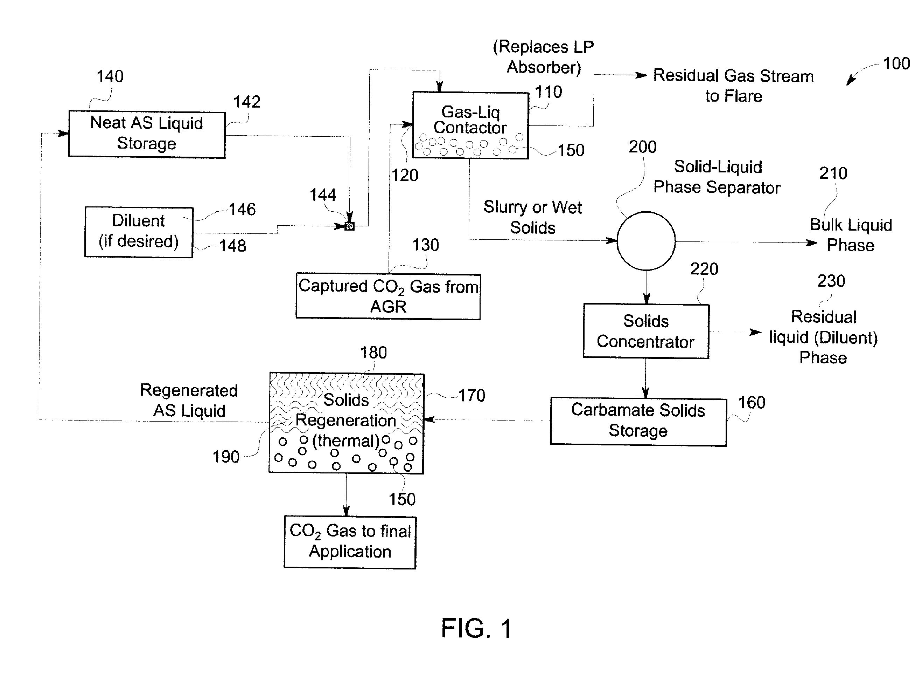

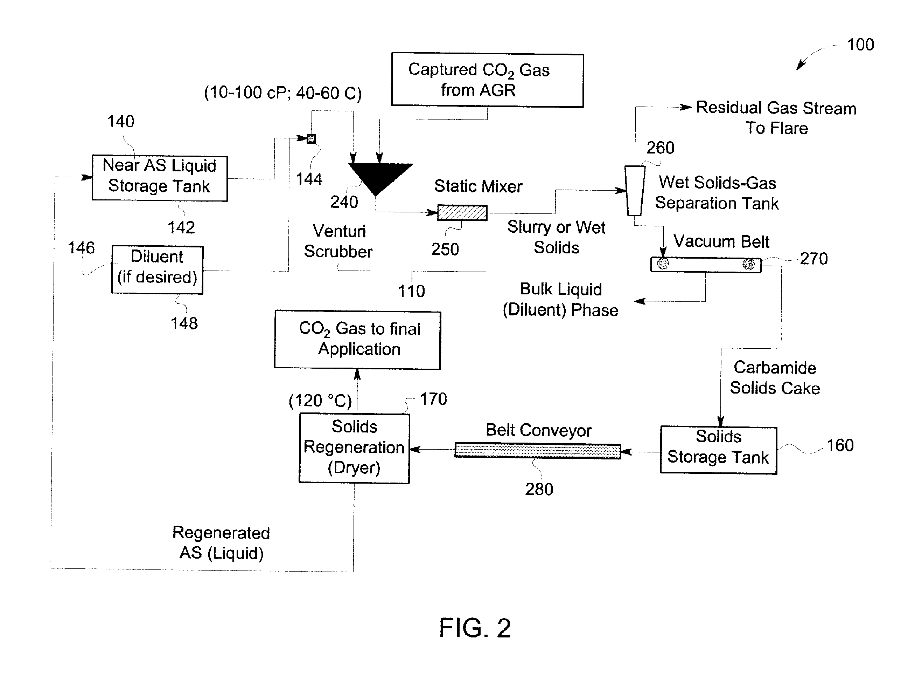

As described in further detail with regard to the systems in FIGS. 1 and 2, a method for capturing, or forming, carbon dioxide from a gas stream comprises chemically reacting carbon dioxide in a gas stream with a liquid phase-changing sorbent to form a solid reaction product, wherein the solid reaction product is in the form of a dry solid, a wet solid, a slurry, or a fine suspension, storing the solid reaction product and heating the solid reaction product to form carbon dioxide gas and the liquid phase-changing sorbent.

Referring to FIG. 1, in an embodiment, a system 100 for capturing or forming carbon dioxide from a gas stream comprises a gas-liquid contactor 110 comprising a gas stream inlet 120. The gas stream 130 comprises carbon dioxide gas. The system 100 also comprises a liquid phase-changing sorbent 140. The liquid phase-changing sorbent 140 is chemically reactive with carbon dioxide to form a solid reaction product 150. The solid reaction product 150 is in the form of a dry solid, a wet solid, a slurry, or a fine suspension. The system 100 further comprises a storage chamber 160, where the solid reaction product 150 is stored. The system also comprises a generation chamber 170, where the solid reaction product 150 is heated to form carbon dioxide gas 180 and the liquid sorbent 190.

In the system 100, a liquid sorbent supply chamber 142 is located upstream from the gas-liquid contactor 110. Optionally, the system 100 further comprises a co-solvent supply chamber 148 located upstream from the gas-liquid contactor 110. Also, optionally, the system 100 further comprises a sorbent-co-solvent mixing chamber 144 located downstream from the sorbent supply chamber 142 and the co-solvent supply chamber 148 and upstream from the gas-liquid contactor 110. The gas-liquid contactor 110 is located upstream from the solids storage chamber 160. The generation chamber 170 is located downstream from the solids storage chamber 160. Optionally, the system 100 further comprises a solid-liquid phase separator 200 located downstream from the gas-liquid contactor 110. The system also optionally comprises a solids concentrator 220 located upstream from the solids storage chamber 160. The liquid sorbent 190 is recirculated from the generation chamber 170 to the liquid sorbent supply chamber 142, where the generation chamber 170 is in fluid communication with the liquid sorbent supply chamber 142.

The gas stream 130 comprising carbon dioxide gas is disposed in the gas-liquid contactor 110 via the gas stream inlet 120. Carbon dioxide is present in a wide variety of gas streams that are treated with the methods and systems described herein. Nonlimiting examples include gas streams originating from a combustion process; a gasification process; an integrated gasification combined cycle (IGCC) process, a landfill; a furnace (e.g., blast furnace or chemical reduction furnace); a steam generator; a boiler; a refinery or chemical plant; a natural gas purification facility and combinations comprising at least one of the foregoing. In an embodiment, the gas stream 130 is a flue stream, e.g., exhaust gas, originating in a power plant that bums fossil fuels such as coal, natural gas or petroleum oil. In a specific embodiment, the gas stream 130 is captured CO₂ gas from an acid gas removal (AGR) system.

In another embodiment, the gas stream 130 is synthetic gas from an AGR system. More specifically, the gas stream 130 is a pre-combustion synthetic gas, or "syngas". Syngas is a combination of hydrogen, carbon monoxide, and carbon dioxide produced from the gasification of coal, liquid hydrocarbons, natural gas, refinery wastes, biomass or other materials whereby carbon monoxide and water react to form carbon dioxide gas and hydrogen gas. "Pre-combustion" syngas refers to syngas before it is burned to produce power. In an aspect of the embodiment, one or more corrosive elements in the syngas are removed prior to the gas stream 130 being disposed in the reaction chamber. Removal of corrosive elements or compounds in the syngas prior to CO₂ capture using the methods and systems herein reduces or prevents contamination and subsequent corrosion of equipment exposed to the syngas due to the presence of the corrosive elements. In an embodiment, sulfur is removed prior to CO₂ capture from syngas using the methods and systems described herein.

In another embodiment, the gas stream 130 comprises carbon dioxide gas and at least one element or compound other than carbon dioxide. Carbon dioxide gas is present in the gas stream 130 in an amount of from about 3 % by volume (vol. %) to about 90 vol. %. The at least one element or compound other than carbon dioxide is present in the gas stream 130 in an amount of from about 10 vol. % to about 97 vol. %. Examples of the at least one element or compound other than carbon dioxide present in the gas stream are nitrogen, hydrogen, water, and carbon monoxide. The captured, or formed, carbon dioxide gas 130 produced by the methods and systems described herein is a purified carbon dioxide gas whereby the carbon dioxide gas formed 180 is at least about 60 vol. % carbon dioxide gas, specifically at least about 90 vol. %, and more specifically at least about 99 vol. % carbon dioxide gas based on the total volume of the captured and formed carbon dioxide gas.

The liquid phase-changing sorbent 140 is transferred from the liquid sorbent supply chamber 142 to the gas-liquid contactor 110 before, after or at the same time the gas stream 130 is disposed in the gas-liquid contactor 110 from the gas stream inlet 120. The liquid phase-changing sorbent 140 is transferred to the gas-liquid contactor 110 via a conduit or a plurality of conduits. In one embodiment, the liquid phase-changing sorbent 140 is in neat, or pure, form, e.g., undiluted, and is disposed in the gas-liquid contactor 110 in the absence of a co-solvent. Co-solvents, or carrier fluids, do not absorb CO₂ and they add a large volume of material, which results in low net CO₂ loading by volume. Not only must the system be designed to accommodate this large volume (increasing capital cost), but additional energy is required to pump it, heat it, cool it, and the like (increasing operating cost). By eliminating the need for a co-solvent or carrier fluid, the energy used to pump the converted sorbent and CO₂ through the system, as well as heating and cooling the material, is saved. Moreover, by not diluting the sorbent, a step in the process and the system equipment associated therewith is eliminated.

In another embodiment, the liquid phase-changing sorbent 140 is in concentrated form. In an aspect of the embodiment, the concentrated liquid phase-changing sorbent 140 allows for a lower design volume of components used in the carbon dioxide recovery system, e.g., lower capacity pumps and storage chambers.

In yet another embodiment, an optional co-solvent 146 that is not a liquid phase-changing sorbent, e.g., does not absorb or chemically react with carbon dioxide, is transferred from a co-solvent supply chamber 148 to the gas-liquid contactor 110. The co-solvent 146 acts as a diluent or carrier fluid for the liquid phase-changing sorbent 140. Examples of optional co-solvents 146 used with the liquid phase-changing sorbent 140 are hydrocarbons (such as dodecane), aromatics (such as toluene or naphthas) and esters. In an embodiment, the system further comprises a sorbent-co-solvent chamber 144 where the liquid phase-changing sorbent 140 and co-solvent 146 are combined. The sorbent 140 and co-solvent are introduced into the sorbent-co-solvent chamber 144 and the gas-liquid contactor 110 via a series of conduits. In an embodiment, the use of an optional co-solvent 146 with the liquid phase-changing sorbent 140 allows for improved flowability, lower viscosities for pumping, easier separation of the CO₂-containing solid reaction product 150 from the liquid co-solvent 146 during use of inertia-based separation devices such as hydrocyclones, or a combination of at least one of the foregoing.

In an embodiment, the particular liquid phase-changing sorbent 140, in neat, concentrated or dilute form, is selected to adjust the affinity of the liquid phase-changing sorbent 140 to one or more elements or compounds present in the gas stream 130, in addition to carbon dioxide. The particular composition of the liquid phase-changing sorbent 140 or optional co-solvent 146, or both, is selected to absorb a desired amount of residual moisture, hydrogen sulfide or other contaminants. For example, in a specific embodiment, the co-solvent is anisole, which allows for the absorption of water moisture from liquids and vapors.

As used herein, "sorbent" means a material capable of absorbing or adsorbing another substance. The liquid phase-changing sorbent 140 comprises a material that is capable of transforming from a liquid to a solid upon chemical reaction with, or absorbing or adsorbing, CO₂ gas. The liquid phase-changing sorbent material relies upon chemical reaction, and optionally physisorption, to remove the carbon dioxide, thereby forming a new solid molecule (e.g., forming new bonds). In an embodiment, the sorbent also relies upon a temperature swing process to facilitate the sorption and desorption of the CO₂.

In one embodiment, the liquid phase-changing sorbent 140 comprises at least one amine material. Various amine compounds (the term as used herein includes polymeric materials as well) are used in the liquid sorbent. Many amines fall into the following classes: aliphatic primary and secondary amines, and polyamines; polyimides (e.g., polyalkyleneimines); cyclic amines, amidine compounds; guanidine compounds, hindered amines; amino-siloxane compounds; amino acids; and combinations comprising at least one of the foregoing. In a specific embodiment, the liquid phase-changing sorbent is an aminosiloxane compound. Exemplary amino-siloxane compounds include compositions which comprise chemical structure (I): 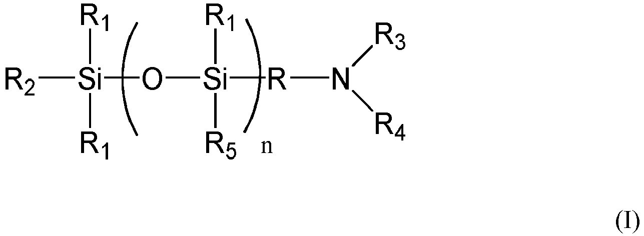 wherein R is a C₁-C₆ alkyl group, which is linear or branched; and which optionally contains at least one hydroxy group; R₁ is independently at each occurrence C₁-C₈ alkyl or aryl; R₂ is R₁ or RNR₃R₄, wherein R₃ and R₄ are independently a bond, hydrogen, or C₁-C₈ alkyl (linear or branched) or R-NR₃R₄ ;wherein n is 1-10; wherein R₅ is R₁ or -R-NR₃R₄ or -O-Si(R₁)₂R₅.

One specific, illustrative example of an amino-siloxane compound is provided below as compound (Ia), wherein "Me" is a methyl group:

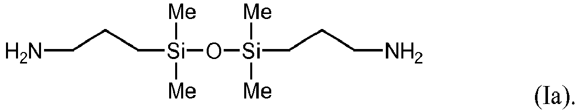

Other specific, illustrative examples of amino-siloxane compounds include: 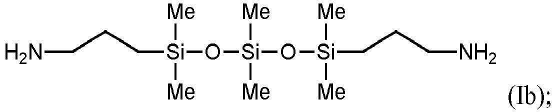 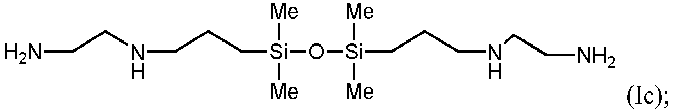 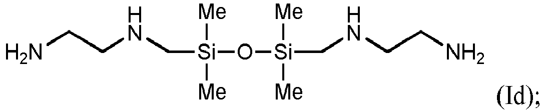 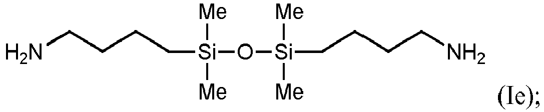 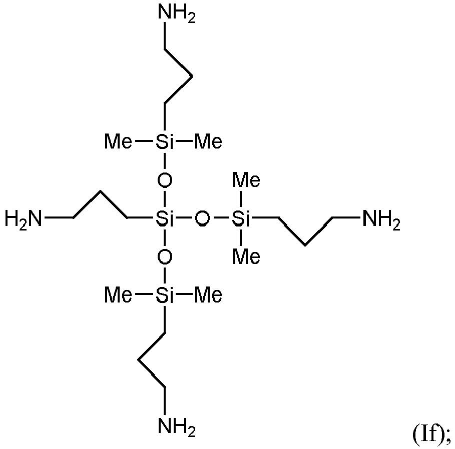 and

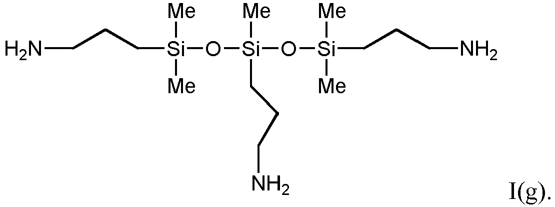

The identity of the solid particulate which is formed by reaction of the liquid sorbent 140 with the CO₂ in the gas stream 130 will depend in large part on the specific liquid sorbent 140 that is used. In the case of amine sorbents, the solid particulate will depend on the identity of the amine. In many instances, the solid particulate comprises a carbamate, a bicarbonate compound, or a combination comprising at least one of the foregoing. In an exemplary embodiment, the liquid phase-changing sorbent 140 is an amino-siloxane compound and the solid reaction product 150 formed upon reaction with carbon dioxide gas is carbamate. Relative to other organic-based liquid amine solvents which are not phase-changing, amino-siloxanes provide improved thermal and oxidative stability, i.e., allow for less degradation and lower cost of use, lower vapor pressures and higher boiling points, i.e., reduced slip or loss by volatization and lower cost of use, lower heat capacities than aqueous solutions of organic amines, i.e., use less heat to desorb CO₂, or a combination of at least one of the foregoing.

In an embodiment, the liquid phase-changing sorbent 140 has a relatively low vapor pressure of from about 0.001 bara to about 0.05 bara, at 120 °C, specifically from about 0.002 bara to about 0.03 bara at 120 °C, and more specifically from about 0.003 bara to about 0.01 bara at 120 °C. In the case of a liquid sorbent 140 having a high vapor pressure, the liquid sorbent 140 is volatile under typical atmospheric conditions. In such embodiments, small droplets of the liquid phase-changing sorbent are carried out of the gas-liquid contactor 110 and/or generation chamber 170, or other chambers downstream of the gas-liquid contactor 110 with the gas flow. It is desirable, therefore, in such embodiments, to include at least one condensation step in the process. In this manner, additional sorbent is recovered from the CO₂-rich gas stream, which results after decomposition of the solid CO₂-rich material, or from the CO₂-lean gas stream, which results after absorption of CO₂ from the raw flue gas. In an embodiment, the condenser (not shown) is outfitted with any type of coolant system or device, e.g., cooling tubes or jackets which utilize a variety of coolant fluids, such as water. Passage of the lean gas stream through the condenser serves to liquefy the residual sorbent, while also coalescing with any small liquid droplets. The collected sorbent is then directed, for example, to a storage vessel or recycled to the absorption vessel.

The temperature of the liquid sorbent disposed in the liquid-gas contactor 110, is from about 30°C to about 70°C, specifically from about 40°C to about 60°C, and more specifically from about 45°C to about 55°C, at near-atmospheric pressure. The temperature is controlled by either controlling the temperature of the liquid sorbent supply chamber 142, the gas-liquid contactor 110 or, if an optional co-solvent is used, by controlling the temperature of the co-solvent supply chamber 148, the sorbent-co-solvent chamber 144, or a combination thereof.

In an embodiment, the liquid sorbent 140 is undiluted and operates at relatively low viscosities., e.g. has low volumetric flow rate. In a specific embodiment, the liquid sorbent is an amino-siloxane having a low viscosity, thereby increasing the mass transfer of CO₂ to the liquid sorbent 140, and rendering addition of a carrier fluid unnecessary. In an aspect of the embodiment, the low viscosity of the liquid sorbent 140 also saves energy by using lower temperatures for thermal regeneration of the CO₂ gas. In another embodiment, no additional pressure is used to carry out the thermal regeneration. In a more specific embodiment, the dynamic viscosity of the liquid sorbent 140 is from about 1 cP to about 500 cP, specifically from about 2 to about 100 cP, and more specifically from about 3 cP to about 20 cP.

The gas-liquid contactor 110 is configured to provide contact of the liquid sorbent 140 with the gas stream 130 such that reaction of the liquid sorbent 140 with CO₂ in the gas stream 130 occurs. The gas-liquid contactor 110 comprises at least one reaction chamber, e.g., an enclosed vessel, or a series of two or more reaction chambers in fluid communication wherein the gas stream 130 is contacted with the liquid phase-changing sorbent 140. The gas stream 130 is disposed in the gas-liquid contactor 110 via gas stream inlet 120. The gas stream 130 is introduced from the gas stream inlet 120 into the gas-liquid contactor 110 via a conduit or a plurality of conduits that transfer the gas stream to one or more locations in the gas-liquid contactor 110. In an embodiment, the liquid phase-changing sorbent 140 is fed to the gas-liquid contactor 110 via a plurality of conduits to a plurality of locations within the gas-liquid contactor 110. In a specific embodiment, the supply point for the liquid phase-changing sorbent 140 is located in an upper region of gas-liquid contactor 110, e.g., to provide sufficient contact time with the CO₂.

After being disposed in the gas-liquid contactor 110, the liquid phase-changing sorbent 140 and gas stream 130 are contacted or mixed with one another. The liquid phase-changing sorbent 140 chemically reacts with CO₂ gas in the gas stream 130 to form a solid reaction product 150 in the form of a dry solid, a wet solid (e.g., coarse suspension), a slurry (e.g., solidus continuous phase), or a fine liquid suspension (e.g., dilute fine particle suspension).

The reaction of the liquid sorbent 140 and carbon dioxide gas in the gas stream 130 is carried out in any large-scale chamber(s) or enclosure(s) that are capable of being operated under the reaction conditions (e.g., temperature, pressure or a combination thereof), and that enables the desired residence time. For example, the gas-liquid contactor 110 is designed to allow for sufficient contact between the gas stream 130 and the liquid sorbent 140, e.g., to maximize the reaction between the liquid sorbent and the CO₂. Exemplary reaction chambers for use as the gas-liquid contactor 110 in the system 100 include, without limitation, a sorption tower, a wetted wall tower, a spray tower, a venturi scrubber, optionally equipped with an entrainment separator, and the like. Moreover, while a horizontal chamber is depicted in FIG. 1, it is to be understood that a vertically-oriented chamber or multiple chamber(s) might alternatively be used.

In various embodiments, an atomizer (not shown) (e.g. orifice(s), spray nozzle(s), or the like) is disposed in fluid communication with the gas-liquid contactor 110 (e.g., located in physical proximity to or within a reaction chamber) to disperse the liquid sorbent 140 into droplets. For example, in an embodiment, an atomizing gas (e.g., air) is supplied from a nozzle tube into the interior of a reaction chamber of the gas-liquid contactor 110. Alternatively, or in addition, the atomizer is designed to atomize the liquid sorbent due to the pressure of the reaction chamber and the size of the inlet from the atomizer into the reaction chamber. In an embodiment, the atomizer is located near the exit of a conduit into the reaction chamber. In some embodiments, a plurality of nozzles are placed across the reaction chamber at different heights, to maximize the number of the sorbent droplets, and/or the atomizer is incorporated into a portion of the conduit or reaction chamber. In another embodiment, a hydraulic nozzle is used to atomize the liquid sorbent without use of an atomizing gas.

The selected size for the droplets of liquid sorbent depends on various factors, such as the composition of the sorbent (e.g., the reactivity of the sorbent with CO₂ gas); and the type and design of the reaction chamber. The droplet size is a balance between maximizing the surface area for contact with the CO₂, providing a sufficient mass for solid particle formation and preventing formed solid particles from being carried out of the reaction chamber in the gas stream. In an embodiment, such as when using a liquid phase-changing sorbent 140 in the gas-liquid contactor 110, the average diameter of the droplets is less than or equal to about 1,000 micrometers (µm). In another embodiment, for example when a venturi scrubber is used as a reaction chamber in the gas-liquid contactor 110, the average diameter of the droplets is about 10 µm to about 100 µm.

In an embodiment, the gas stream 130 is directed into a lower region of the gas-liquid contactor 110 (or reaction chamber) via the gas stream inlet 120, relative to an upper region. In this manner, an induced countercurrent flow exposes the gas stream 130, when it has the lowest CO₂ concentration, to the freshest liquid sorbent 140. At the same time, the gas stream 130 with the highest CO₂ concentration is exposed to the most "converted" sorbent. This type of flow scheme permits the resulting solid material 150 to agglomerate more readily, leading to faster solidification.

The flow rate of the flue gas entering the reaction chamber of the liquid-gas contactor 110 is chosen to enable the desired CO₂ removal, e.g. to provide the residence time to reduce the CO₂ level in the gas stream to an acceptable level (e.g., less than or equal to 1.9 volume percent (vol%). The gas stream inlet 120 pressure will depend on the design and operating conditions of the gas-liquid contactor 110 as well as the type of atomizer. For example, the pressure drop for the gas stream 130 entering the reaction chamber is relatively small in the case of a spray tower (e.g., on the order of inches of water), but is larger for other types of reaction chambers.

As mentioned previously, the chemical reaction between the CO₂ in the gas stream 130 and the liquid sorbent 140 droplets results in the formation of solid particles 150. The size, shape, and density of the particles depend on various factors, such as the size of the initial droplets; the content of the liquid sorbent; the residence time within the reaction chamber; and the gas flow rate. Desirably, the solid reaction product particles 150 is small enough to solidify to at least a non-sticky surface texture, but large enough to provide a sufficient mass for effective transport out of the gas-liquid contactor 110. Generally, the solid reaction product material 150 is in the form of particles, e.g., spherical or substantially spherical in shape. The average particle density varies significantly, but in an exemplary embodiment is in the range of about 1.1 grams per cubic centimeter (g/cc) to about 1.5 g/cc. The size of the particles varies, e.g., depending on the initial spray technique used. For example, average particles sizes are similar to those of the droplets, less than or equal to 1,000 µm (not accounting for any agglomeration of individual particles).

Formation of the solid material 150 removes a substantial amount of CO₂ from the gas stream 130, e.g., in some embodiments, greater than or equal to 50% by volume (vol%); specifically greater than or equal to 70 vol%, more specifically greater than or equal to 90 vol%. In an embodiment, the remaining CO₂-lean flue gas is then released as an outlet gas from the gas-liquid contactor. Alternatively, the lean gas stream is recycled back to the reaction chamber in the gas-liquid contactor 110 or another reaction chamber or gas-liquid contactor 110 for additional treatment or use. The solid reaction product material 150 is then transported to a storage chamber 160 and later, when desorption is desired, to a generation chamber 170.

In an embodiment, the system 100 further comprises a solid-liquid phase separator 200 disposed between the liquid-gas contactor 110 and the solids storage chamber 160. The solid reaction product 150 is transferred from the gas-liquid contactor 110 to the solid-liquid phase separator 200. The solid-liquid phase separator 200 separates the solid reaction product 150, which is in a dry solid, a wet solid, a slurry or a fine suspension form, from a bulk liquid phase 210. The bulk liquid phase 210 comprises unreacted liquid sorbent 140 and non-CO₂-absorbing co-solvent if an optional co-solvent 146 is used with the liquid sorbent 140.

In another embodiment, the system further comprises a solids concentrator 230 disposed between the solid-liquid phase separator 200 and the solids storage chamber 160. The solids concentrator 230 separates the solid reaction product 150 from any residual liquid left after the solid reaction product 150 is separated from the bulk liquid phase in the solid-liquid phase separator 200. The residual liquid comprises any residual liquid sorbent 140 and co-solvent if an optional co-solvent 146 is used, resulting in a solid cake. In a specific embodiment, the solid cake is a carbamate.

In an embodiment, transfer of the solid reaction product 150 to the solid-liquid phase separator 200 and solids concentrator 220 is accomplished via conduits arranged such that gravity or inertial forces the solids from the gas-liquid contactor 110 to the solid-liquid phase separator 200 and solids concentrator 220, respectively. In another embodiment, transport is accomplished by conveyor means, gravity, or a combination of at least one of the foregoing. In a specific embodiment, a transportation mechanism between the liquid-gas contactor 110 and the solids storage chamber 160 is pressurized.

The solid cake reaction product 150 is transferred to a solids storage chamber 160. In an aspect of the embodiment, the solid reaction product 150 comprising carbon dioxide gas and the liquid phase-changing sorbent is stored until formation of the captured CO₂ gas is desired. In another aspect of the embodiment, the stored solid reaction product 150 is particularly advantageous in that the carbon dioxide is transported in a solid form to a final CO₂ desorption, sequestration or further processing site more easily and safely than in gaseous or liquid form. Transportation of the solid product is accomplished by any means for physically transporting a material from an origin point to a destination point, e.g., motor vehicle, train, ship, airplane, etc. The solid reaction product 150 is shipped or transported more easily than conventional carbon capture methods using liquid solvents, requires less volume capacity for storage and transport, reduces the possibility of liquid entrainment during operation and/or eliminates the possibility of chemical spills during transportation.

When desorption of the CO₂ gas in the solid reaction product 150 is desired, the solid reaction product 150 is transferred from a solids storage chamber 160 to a generation chamber 170. Desorption is accomplished by thermal decomposition at increased temperatures. As mentioned above, the formed carbon dioxide stream 180 is suitable for sequestration and/or other further processing. In an embodiment, the liquid sorbent 140 is recycled to the liquid sorbent supply chamber 142, the sorbent-co-solvent chamber 144 if an optional co-solvent is used or the liquid-gas contactor 110.

The generation chamber 170 is configured to desorb the CO₂ from the solid reaction product particles 150 at an increased temperature, releasing CO₂ gas and the liquid sorbent. In an embodiment, the CO2 gas is compressed under pressure prior to storage, transport of further use. In an embodiment, the transport mechanism pressurizes the solid reaction product particles 150 prior to delivery into the generation chamber 170, the compression duty needed for sequestration of the CO₂ is reduced compared to a system that desorbs CO₂ at near-atmospheric pressure. The generation chamber 170 is any type of desorption unit used to separate volatile compounds from solid particles. In general, the generation chamber 170 is a vessel or chamber, which is capable of providing varying heat and/or pressure conditions to liberate the CO₂ from the solid reaction product particles 150. Exemplary generation chambers for use in the system 100 include, without limitation, continuous stirred tank reactors (CSTR), and other like desorption vessels.

Desorption units, also termed "thermal desorption units", which are designed to operate at relatively low temperatures, e.g., about 200°F to 600°F (93°C-316°C); or relatively high temperatures, e.g., about 600°F to 1,000°F (316°C-538°C). In a specific embodiment, the regeneration chamber 170 is a desorption unit which operates at about 80-200 °C and more specifically at 120-180 °C.

In terms of applied temperature, thermal desorption units are often grouped into three process types: directly-heated units, indirectly-heated units; and in-situ units. Moreover, the configuration of the unit varies, e.g., depending on what type of solid material is being treated; and what temperature is required. In some instances, the regeneration unit is operated under a vacuum or very low pressure conditions; and/or low-oxygen conditions, e.g., to lower the heat requirements needed for desorption. Generally, desorption of the solid reaction product particles 150 is carried out by heating the particles. The heat-treatment regimen will depend on the composition and size of the solid particles; the amount of CO₂ bound within the particles; and pressure conditions within regeneration unit 36. Desirably, the temperature is high enough to release as much CO₂ as possible from the solid particles. Typically the temperature is greater than or equal to the decomposition temperature of the particles. However, the temperature should not be excessively high, i.e., requiring excessive energy use; or possibly resulting in decomposition of the sorbent to byproducts which are difficult to handle in the overall process. Generally, the sorbent is formed (e.g. the CO₂ is released from the solid material while the solid material converts back to the liquid sorbent) under pressures of greater than or equal to 1 atm specifically, greater than or equal to 2 atm, and more specifically, 4 to 20 atm. Desorption temperatures should be greater than 70°C and less than the decomposition temperature of the liquid sorbent. In a specific embodiment, the solid particles are carbamates and the desorption temperature is about 80°C to about 200°C, specifically about 120 to 180, more specifically about 120-150 °C. In some embodiments, the internal pressure in the chamber of the generation chamber 170 is decreased, to accelerate the desorption process. In an embodiment, the pressure is less than 1 atm.

The substantially pure regenerated CO₂ gas 180 is released or otherwise directed out of generation chamber 170 by a conduit or multiple conduits. In an embodiment, the CO₂ gas is compressed and/or purified, e.g., for re-use, or for transport to a location.

The desorption step also functions to form a substantial amount of liquid phase-changing sorbent 190. In some embodiments, the formed liquid phase-changing sorbent 190 is directed to treatment, storage, or disposal facilities. In an exemplary embodiment, formed liquid phase-changing sorbent 190 is directed back to the liquid sorbent supply chamber 142 or the gas-liquid contactor 110, through one or more conduits.

Referring to FIG. 2, in a more specific embodiment of the system 100, the system 100 advantageously utilizes standard plant equipment to accomplish absorption, transfer and desorption. The liquid-gas contactor 110 comprises a venturi scrubber 240. A venturi scrubber includes multiple sections, e.g., a converging section, a throat section, and a diverging section. An inlet gas stream enters the converging section, and as the area decreases, gas velocity increases. Liquids are introduced at the throat, or at the entrance to the converging section. The gas stream is forced to move at very high velocities in the small throat section, shearing the liquid matter from the vessel walls. This action produces a large number of very tiny droplets, which react with the gas stream. In an embodiment, the venturi scrubber 240 is conical in shape. In other embodiments, the venture scrubber is in any shape effective to produce droplets of the liquid sorbent 140 to react with the gas stream 130. The venturi scrubber 240 also optionally further comprises an atomizer (not shown).

In one aspect of the embodiment, the liquid-gas contactor 110 further comprises a mixing pipe or vessel comprising a static mixer 250 in fluid communication with the venturi scrubber 240. The static mixer 250 operates to promote intimate contact of the CO₂ gas in the gas stream 130 with the liquid phase-changing sorbent 140.

In another aspect of the embodiment, the system 100 further comprises a solid-gas separator 260. As depicted in FIG. 2, the solid-gas separator 260 is a cyclone where gravity or inertial forces divert the gas from the solid and liquid in the dry solid, wet solid, slurry or fine suspension reaction product 150. The solid-gas separator 260 is disposed between the liquid-gas contactor 110 and the solid storage chamber 160. The solid-gas separator 260 is configured to separate the solid reaction product particles 150 from the "scrubbed" gas stream (i.e., the gas stream from which the CO₂ has been removed to the desired level (e.g., that is substantially free of CO₂). The solid reaction product particles 150 fall to the bottom of the solid-gas separator 260 cyclone where the solid material is emptied into a transport mechanism 270, for example, via a hopper (not shown). The hopper then feeds the solid reaction product 150 to an inlet of the transport mechanism 270. The separated, or scrubbed, gas stream is recycled back to the gas-liquid contactor 110 for further extraction or to a gas outlet or flare.

The transport mechanism 270 is disposed between the solid-gas separator 260 and the solids storage chamber 160. The transport mechanism is a conveyor belt that transports the solid reaction product, now separated from the scrubbed gas, and in the form of a dry solid, wet solid, slurry, or fine suspension to the solids storage chamber 160 for transportation to an off-site generation chamber 170 or an on-site generation chamber 170. The transportation mechanism 270 further comprises a solid-liquid phase separator 200 and a solids concentrator 220, which separate bulk and residual liquid, respectively, from unreacted liquid phase-changing sorbent 140 and/or an optional co-solvent 146 from the solid reaction product 150. In an aspect of the embodiment, a vacuum conveyor belt acts as the transportation mechanism 270, the solid-liquid phase separator 200 and the solids concentrator 220, forming a reaction product solids cake, e.g., carbamate solids cake. The solids cake allows for lower volume capacities in the regeneration chamber and related equipment, maximizes the amount of regenerated CO₂ gas extracted upon desorption, and compresses the solid material such that storage and transport capacities are maximized. In an embodiment, the bulk and/or residual liquid is recycled to the respective liquid sorbent and co-solvent supply chambers 142, 148 or to the liquid-gas contactor 110. In a specific embodiment, the vacuum conveyor belt acting as the transport mechanism 270 is operated to apply a vacuum suction of about 1 to about 100 mm of mercury, specifically 50-100 mm of mercury or about 1 to about 10 mm of mercury.

In another embodiment, the system 100 further comprises another transport mechanism 280 disposed between the solids storage chamber 160 and the generation chamber 170 to transport the solid reaction product 150 to the generation chamber 170 for desorption. As depicted in FIG. 2, the transport mechanism 280 is a conveyor e.g., belt or Auger-driven. Alternatively, the transport mechanisms 270 and 280 are any physical means of transferring the solid reaction product 150 from one point to another in the system 100.

The methods and systems described herein advantageously use captured CO₂ in a solid form to store, release or use the captured CO₂ as desired. The methods and systems described herein allow for and accommodate fluctuations in the amount of CO₂ in a given gas stream from which CO₂ is captured and allow for the steady delivery flow of captured CO₂ to a desired application. The methods and systems described herein are advantageously used in any gasification unit operation requiring the capture or purification of carbon dioxide gas, or a combination thereof. In an embodiment, the systems and methods described herein are used during transient or tripping conditions of a gasifier, a CO₂ compressor, or other plant upsets. For example, when a high-pressure CO₂ gas compressor becomes unavailable, the CO₂ gas stream is sent from the acid gas removal system (AGR) to a low-pressure CO₂ absorber to temporarily capture the CO₂ and avoid CO₂ emissions. The methods and systems herein are used to partially or completely replace a conventional low-pressure CO₂ absorber. Due to volume constraints and capital costs associated with large volumes of solvent and equipment for its handling, operation at low pressure using conventional LP CO₂ absorbers is only practical for short durations of time, e.g., about one hour. The methods and systems herein are used in addition to or to completely replace the LP CO₂ absorber. The methods and systems herein operate continuously for extended periods of time, operate at higher temperatures and pressures than conventional liquid-only LP CO2 absorbers, do not require refrigeration and associated power consumption and reduce CO₂ plant emissions.

The methods and systems described herein are also used to partially or completely replace conventional AGR systems using liquid solvents for CO₂ removal from any pre-combustion fuel gas generator, e.g., syngas. Unlike conventional CO₂ capture systems, the methods and systems herein involve the handling and concentration of solids. The method and systems herein overcome the drawbacks associated with conventional LP CO₂ absorbers and AGR systems because the methods and systems herein do not require large volumes of dilute liquids or high power consumption required by refrigeration or cooling, thereby reducing capital costs and allowing operation for extended periods of time, e.g., several hours or even days. The methods and systems herein also allow for the storage and transportation of the solid reaction product comprising the absorbed CO₂ gas, requiring lower volume capacities and reducing the possibility of entrainment, leaks or spills.

In addition, the transport mechanisms described above are advantageously used with the liquid CO₂ sorbents provided herein to effectively capture CO₂ for formation in a manner that is more cost effective than current methods. Energy is saved by using the liquid sorbent to form the slurried or wet solid material, thereby not having to pump, heat, or cool the larger volumes of fluid used by systems employing wholly liquid sorbents (i.e., non-phase changing sorbent) and/or that require non-absorbing co-solvents or carrier fluids different from the sorbent. Moreover, no additional liquids are required in the system. This reduces materials and capital cost (e.g., less storage tanks, and the like), increases efficiency, simplifies the CO₂ capture process, and reduces the volume/size/footprint of the system. The process stream so treated is any gas stream wherein the level of CO₂ therein is desirably reduced, and in many processes, CO₂ is desirably reduced at least in the exhaust streams produced thereby. The method and systems herein also produce a purified CO₂ gas stream, reducing the presence of contaminants present in the original gas stream.

The regenerated carbon dioxide gas is used in CO₂ sequestration or for other further processing. Examples of such applications include enhanced oil recovery and saline aquifers.

Ranges disclosed herein are inclusive and combinable (e.g., ranges of "up to about 25 wt%, or, more specifically, about 5 wt% to about 20 wt%", is inclusive of the endpoints and all intermediate values of the ranges of "about 5 wt% to about 25 wt%," etc.). "Combination" is inclusive of blends, mixtures, alloys, reaction products, and the like. Furthermore, the terms "first," "second," and the like, herein do not denote any order, quantity, or importance, but rather are used to distinguish one element from another, and the terms "a" and "an" herein do not denote a limitation of quantity, but rather denote the presence of at least one of the referenced item. The modifier "about" used in connection with a quantity is inclusive of the state value and has the meaning dictated by context, (e.g., includes the degree of error associated with measurement of the particular quantity). The suffix "(s)" as used herein is intended to include both the singular and the plural of the term that it modifies, thereby including one or more of that term (e.g., the colorant(s) includes one or more colorants). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

While the invention has been described with reference to example embodiments, it will be understood by those skilled in the art that various changes may be made and equivalents may be substituted for elements thereof without departing from the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method for forming carbon dioxide from a gas stream, comprising:
chemically reacting carbon dioxide in a gas stream with a liquid phase-changing sorbent to form a solid reaction product, wherein the solid reaction product is in the form of a dry solid, a wet solid, a slurry, or a fine suspension;
storing the solid reaction product; and
heating the solid reaction product to form carbon dioxide gas and the liquid phase-changing sorbent.

2. The method of claim 1, wherein the liquid phase-changing sorbent is an amino-siloxane compound and the solid reaction product formed is a carbamate.

3. The method of claim 1 or claim 2, wherein the liquid phase-changing sorbent is chemically reacted with the carbon dioxide in the gas stream in the absence of a co-solvent.

4. The method of claim 1, 2 or 3, wherein the liquid phase-changing sorbent is chemically reacted with the carbon dioxide in the gas stream in the presence of a co-solvent that it is not a liquid phase-changing sorbent.

5. The method of any preceding claim, further comprising recycling the liquid phase-changing sorbent to a liquid phase-changing sorbent supply chamber or a gas-liquid contactor.

6. The method of any preceding claim, further comprising atomizing the liquid phase-changing sorbent before the liquid phase-changing sorbent is chemically reacted with carbon dioxide in the gas stream.

7. The method of any preceding claim, further comprising separating the solid reaction product from unreacted gas from the gas stream, unreacted liquid sorbent and an optional co-solvent that is not a liquid phase-changing sorbent, and preferably further comprising recycling the unreacted gas from the gas stream to a gas-liquid contactor.

8. The method of any preceding claim, wherein the gas stream comprises about 3-20 vol. % carbon dioxide and wherein the carbon dioxide gas formed comprises a purified carbon dioxide gas comprising about 50-99 vol. % carbon dioxide.

9. A system (100) for forming carbon dioxide from a gas stream (130), comprising:
a gas-liquid contactor (110) comprising a gas stream inlet, the gas stream (130) comprising carbon dioxide gas;
a liquid phase-changing sorbent (140), wherein the liquid phase-changing sorbent is chemically reactive with carbon dioxide to form a solid reaction product (150), wherein the solid reaction product is in the form of a dry solid, a wet solid, a slurry or a fine suspension;
a storage chamber (160), wherein the solid reaction product (150) is stored; and
a generation chamber (170), wherein the solid reaction product (150) is heated to form carbon dioxide gas and the liquid sorbent (190).

10. The system of claim 9, wherein the stored solid reaction product (150) is transported to a carbon dioxide gas sequestration application or processing application prior to being transferred to the generation chamber (170).

11. The system of claim 10, wherein the carbon dioxide gas sequestration application is an enhanced oil recovery system, a syngas production system, an integrated gasification combined cycle system, a natural gas purification process, an oil refinery or chemical plant, or coal gasification system.

12. The system of claim 9, 10 or 11, wherein the system (100) is used during transient or tripping conditions of a carbon dioxide gas compressor in a gasification system.

13. The system of claim 9, 10, 11 or 12, wherein the system (100) replaces a low pressure carbon dioxide gas absorber in a gasification system, and/or an acid gas removal carbon dioxide gas absorber in a gasification system.

14. The system of any one of claims 9 to 13, wherein the gas-liquid contactor (110) further comprises a device for atomizing the liquid phase-changing sorbent, and/or a static mixer.

15. The system of any one of claims 9 to 14, wherein the system further comprises:
a solid-gas separator (260) disposed between the gas-liquid contactor (110) and the storage chamber (160); and
a transport mechanism (270) disposed between the gas-liquid contactor (110) and the storage chamber (160), wherein the transport mechanism separates the solid reaction product from residual liquid phase-changing sorbent and an optional co-solvent, wherein the optional co-solvent is not a liquid phase-changing sorbent;
wherein preferably the transport mechanism (230) is a vacuum conveyor belt having a vacuum pressure of from about 1 mm to about 100 mm of mercury.
